# EUROPÄISCHE PATENTANMELDUNG

(11) **EP 1 249 923 A2**
(43) Veröffentlichungstag der Anmeldung: **16.10.2002**
(21) Anmeldenummer: 02100366.0
(22) Anmeldetag: 11.04.2002
(51) Int. Cl.: H02M 1/00, H02M 7/06

(54) **Schaltung zur Umwandlung von Wechselspannung in Gleichspannung**

(30) Priorität: 12.04.2001 DE 10118285
(71) Anmelder: Philips Corporate Intellectual Property GmbH, 20099 Hamburg (DE); Koninklijke Philips Electronics N.V., 5621 BA Eindhoven (NL)
(72) Erfinder: Dürbaum, Thomas,Dr., Philips Int. Property GmbH, 52066, Aachen (DE); Sauerländer, Georg, Philips Int. Property GmbH, 52066, Aachen (DE)
(74) Vertreter: Volmer, Georg, Dipl.-Ing.

(57) **Zusammenfassung**

Die Erfindung betrifft eine Schaltung zur Umwandlung von Wechselspannung in Gleichspannung für einen Verbraucher (RL), bei der der eingespeiste Wechselstrom über eine große Induktionsspule (L50) und einen Gleichrichter (G) geleitet wird. Ausgangsseitig weist der Gleichrichter (G) zwei parallel geschaltete Kondensatoren (C1, C2) auf, welche durch eine Diode (D) getrennt sind. Dabei wird der näher zum Gleichrichter (G) gelegene Kondensator (C1) in der zweiten Hälfte jeder Netzwelle über einen aktiven Konverter (20) zumindest teilweise entladen, wodurch die Stromentnahme verbreitert und die Netzharmonischen verringert werden. Ferner kann die Induktionsspule (L50) entsprechend kleiner dimensioniert werden, und trotzdem kann die Schaltung gleichzeitig einschlägige Normvorschriften erfüllen.

## Beschreibung

Die Erfindung betrifft eine Schaltung zur Umwandlung von Wechselspannung in eine ungeregelte Gleichspannung für mindestens einen Verbraucher, enthaltend
- eine Wechselspannungseinspeisung,
- ein Gleichrichtermodul, dessen zwei Eingänge mit der Wechselspannungs-einspeisung verbunden sind und an dessen zwei Ausgängen zwei Ausgangsleitungen mit Außenanschlüssen für die Ankopplung mindestens eines Verbrauchers angeschlossen sind,
- mindestens eine zwischen der Wechselspannungseinspeisung und dem Gleichrichtermodul angeordnete Induktionsspule.

Eine Vielzahl von elektrischen oder elektronischen Geräten benötigt für ihren Betrieb eine Gleichspannung, welche aus der Wechselspannung des Stromversorgungsnetzes bereitgestellt beziehungsweise erzeugt werden muss. Stellvertretend für derartige Endgeräte sei ein Fernsehgerät (TV) genannt. Die in solchen Geräten eingesetzten Schaltungen zur Umwandlung der Wechselspannung in Gleichspannung müssen bestimmte Anforderungen hinsichtlich ihres Umwandlungsverhaltens, insbesondere hinsichtlich des verbleibenden Anteils von Netzharmonischen erfüllen. Derartige Anforderungen sind nicht zuletzt Gegenstand von Normen, wobei diesbezüglich insbesondere die EN 61000-3-2 zu nennen ist, welche in Europa von Endgeräten, die mehr als 75 W Leistungsaufnahme aufweisen, ab dem Jahr 2001 zu erfüllen ist.

Zur Gewährleistung der Einhaltung der genannten Qualitätsnormen gibt es verschiedene Möglichkeiten mit verschiedenen optimalen Leistungsbereichen. Für große Leistungen ab ca. 500 W überwiegen aktive Lösungen. Im kleineren Leistungsbereich findet man dagegen häufig 50 Hz-Spulen. Diese sind verhältnismäßig preiswert, jedoch auch verhältnismäßig groß und schwer. Diese Größe bzw. diese konzentrierten Massen führen zu Problemen mit dem verfügbaren Platz auf gedruckten Leiterplatten bzw. zu Problemen bei der Stoßfestigkeit der hergestellten Geräte.

Vor diesem Hintergrund war es Aufgabe der vorliegenden Erfindung, eine Schaltung zur Umwandlung von Wechselspannung in Gleichspannung für mindestens einen Verbraucher bereitzustellen, welche eine ausreichende Qualität des Umwandlungsverhaltens bei begrenztem Platz- und Kostenaufwand gewährleistet.

Diese Aufgabe wird durch eine Schaltung mit den Merkmalen des Anspruchs 1 gelöst. Vorteilhafte Ausgestaltungen sind in den Unteransprüchen enthalten.

Die Schaltung zur Umwandlung von Wechselspannung in Gleichspannung für mindestens einen Verbraucher enthält demnach folgende Bestandteile:
(a) Eine Wechselspannungseinspeisung, über welche die umzuwandelnde Wechselspannung bereitgestellt wird.
(b) Ein Gleichrichtermodul bekannter Bauart, dessen zwei Eingänge für die Zuleitung einer Wechselspannung jeweils mit der Wechselspannungseinspeisung verbunden sind, und welches zwei Gleichspannungsausgänge aufweist, von welchen entsprechende Ausgangsleitungen zu Außenanschlüssen führen, an die mindestens ein Verbraucher angeschlossen werden kann.
(c) Einen Hauptkondensator, welcher parallel zu einem anzuschließenden Verbraucher zwischen den beiden Außenanschlüssen des Gleichrichtermoduls liegt.
(d) Mindestens eine Induktionsspule, welche in einer der Verbindungsleitungen angeordnet ist, die die Wechselspannungseinspeisung mit dem Gleichrichtermodul verbinden. Die Induktionsspule hat die Aufgabe, den Nachladestrom abzuflachen bzw. den Oberwellenanteil des Nachladestroms zu reduzieren.
   Die Schaltung ist dadurch gekennzeichnet, dass sie weiterhin enthält:
(e) Einen weiteren Kondensator, welcher parallel zum Hauptkondensator zwischen den beiden Ausgängen des Gleichrichtermoduls liegt.
(f) Mindestens eine Diode, welche in einer der Ausgangsleitungen des Gleichrichtermoduls liegt und dabei den Hauptkondensator vom weiteren Kondensator trennt, wobei die Diode in Bezug auf den Gleichspannungsausgang des Gleichrichtermoduls in Durchgangsrichtung gepolt ist.
(g) Einen aktiven Konverter, dessen Eingang zwischen der Diode und dem Gleichrichtermodul (und damit an eine Platte des weiteren Kondensators) angeschlossen ist und welcher so eingerichtet ist, dass er den weiteren Kondensator in der zweiten Hälfte jeder von der Wechselspannungseinspeisung eingespeisten Halbwelle zumindest teilweise entlädt.

Durch den weiteren Kondensator, welcher eine verhältnismäßig kleine Kapazität haben kann, und durch den Entladevorgang über den aktiven Konverter wird der Verlauf des Eingangsstromes in vorteilhafter Weise verändert. Insbesondere kommt es zu einer Reduktion des Oberwellenanteils. Dies kann wiederum dazu ausgenutzt werden, die Induktionsspule entsprechend kleiner auszulegen, weil die benötigte Induktivität L kleiner gewählt werden kann. Auf diese Weise wird es möglich, Induktionsspulen mit drastisch reduzierter Größe zu verwenden, welche auch unter beengten Platzverhältnissen auf gedruckten Leiterplatten einsetzbar sind und Probleme mit der Stoßfestigkeit der Geräte vermeiden. Dabei ist gleichzeitig gewährleistet, dass einschlägige Normvorschriften erfüllt werden.

Bei dem aktiven Konverter kann es sich z.B. um einen Aufwärtsregler bzw. Hochsetzsteller oder einen Sperrwandler handeln. Die vom Konverter transportierte Energie kann entweder dem Hauptkondensator zugeführt werden, zur Versorgung der Schaltregler-IC's eines nachgeschalteten DC-DC-Konverters verwendet werden oder direkt einer Last auf der netzgetrennten Seite (Sekundär-Seite) eines nachgeschalteten DC-DC-Konverters zugeführt werden.

Im Folgenden wird die Erfindung mit Hilfe der Figuren beispielhaft erläutert. Es zeigt:
- Fig. 1: eine Schaltung nach dem Stand der Technik zur Versorgung von zwei Verbrauchern;
- Fig 2: eine Schaltung nach dem Stand der Technik zur Versorgung eines Verbrauchers;
- Fig 3: die bei einer Schaltung nach Figur 1 oder 2 eintretende Form der Stromentnahme;
- Fig 4: eine erfindungsgemäße Schaltung;
- Fig 5: die bei der Schaltung nach Figur 4 eintretende Form der Stromentnahme.

Die Erzeugung von Gleichspannungen zur Versorgung von elektronischen Endgeräten aus einer Wechselstrom-Netzspannung muss hinsichtlich der Umwandlung der Wechselspannung in Gleichspannung gewisse Mindestkriterien erfüllen. Für Verbraucher mit mehr als 75 W Leistungsaufnahme werden diese Anforderungen zum Beispiel in der zukünftigen Norm EN 61000-3-2 ausgedrückt. Verschiedene Verfahren zur Erfüllung dieser Norm sind bemüht, einen möglichst exakt sinusförmigen Eingangsstrom zu erzeugen. Eine derartige Sinusform ist von der Norm indes nicht zwingend vorgeschrieben.

Ein weit verbreitetes Verfahren zur Erfüllung von Qualitätsvorschriften besteht in einer passiven Lösung unter Verwendung einer sogenannten 50 Hz-Spule, welche den Eingangs-Strom glättet. Dabei wird jedoch eine hohe Induktivität notwendig, um zum Beispiel die EN 61000-3-2 zu erfüllen. Die entsprechende Spule ist somit sehr groß und schwer, was Probleme bei ihrer Unterbringung auf einer gedruckten Platine sowie bei Stoßtesten der Geräte verursacht. Mit der vorliegenden Erfindung wird eine Schaltung zur Verfügung gestellt, welche die Verwendung kleinerer Spulen bei gleichzeitiger Erfüllung von Qualitätsvorschriften für die Umwandlung ermöglicht.

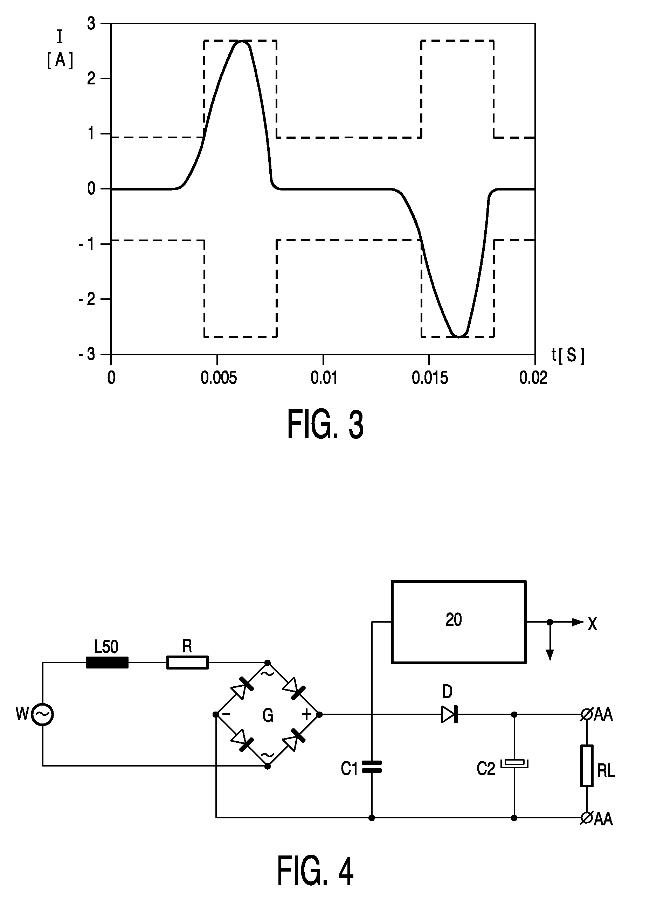

In der Norm EN 61000-3-2 werden Klassen Abis D unterschieden, wobei die Zugehörigkeit eines Gerätes zu einer Klasse von verschiedenen Merkmalen (zum Beispiel der Tragbarkeit des Gerätes) abhängt. Für viele Endgeräte wie z.B. TV-Geräte kommen im Wesentlichen die Klassen A und D in Betracht, wobei die Zugehörigkeit zu der einen oder anderen Klasse davon abhängt, ob die Signalform der Stromentnahme aus einer Wechselspannungsquelle zu mehr als 5% von einer in der Norm definierten Referenzkurve abweicht oder nicht. Die Referenzkurve ist in Figur 3 als gestrichelte Rechteckkurve eingetragen. Liegt die Signalform einer Stromentnahme zu mehr als 5% außerhalb der Referenzkurve, so fällt das Gerät in Klasse A In dieser Klasse bestehen großzügigere Grenzwerte für die im Signal noch zulässigen höheren Harmonischen.

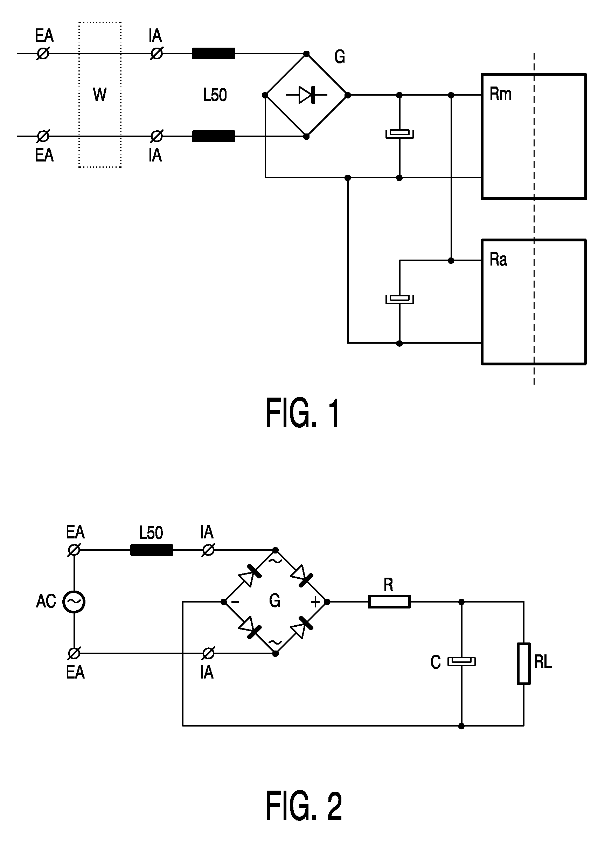

Figur 1 zeigt eine Schaltung nach dem Stand der Technik zur Versorgung zweier Verbraucher Rm, Ra mit Gleichspannung, die durch Umwandlung aus einer Wechselspannungsquelle gewonnen wird. Diese Schaltung entspricht derjenigen aus Figur 2, wobei die beiden Verbraucher Rm, Ra parallel an die Ausgänge des Gleichrichtermoduls G gehängt sind.

Figur 2 zeigt die bekannte Schaltung zur Versorgung eines Verbrauchers RL mit Gleichspannung genauer. Die Leistung wird einer Wechselspannungsquelle AC entnommen und durch ein Gleichrichtermodul G in eine ungeregelte oder schwankende (mit "ripple" behaftete) Gleichspannung umgewandelt. An den Eingangsanschlüssen des Gleichrichters G wird die Wechselspannung eingespeist. In einer der Eingangsleitungen oder in beiden Eingangsleitungen befindet sich dabei zur Glättung eine 50 Hz-Spule L50. An den Ausgangsanschlüssen "+", "-" des Gleichrichtermoduls G kann die Gleichspannung vom Verbraucher RL abgegriffen werden. Die beiden Ausgangsleitungen zu diesen Anschlüssen können über einen Glättungskondensator C gekoppelt sein. Ferner befindet sich häufig in einer Ausgangsleitung ein Widerstand R, um eine Begrenzung des Einschaltstroms zu erzielen.

Die mit einer Schaltung nach Figur 1 beziehungsweise nach Figur 2 resultierende Kurvenform der Stromentnahme ist in Figur 3 dargestellt, wobei der Schaltung folgende Parameter zugrunde liegen: R = 1.5 Ohm, L50 = 32 mH, C = 220 µF, Uin = 230 V, f = 50 Hz, Po = 145 W. Die in Figur 3 ebenfalls eingetragene gestrichelte Linie entspricht der Referenzkurvenform der Norm EN 61000-3-2, anhand derer die Klassen A und D unterschieden werden. Da die dargestellte Signalform der Schaltungen nach den Figuren 1 und 2 innerhalb der Referenzkurvenform bleibt, muss sie gemäß der EN 61000-3-2 die Anforderungen der Klasse D erfüllen.

In Figur 4 ist eine erfindungsgemäße Schaltung zur Versorgung eines Verbrauchers RL dargestellt. Bei dieser Schaltung wird die benötigte Energie von den Eingängen ("~") eines Gleichrichtermoduls G aus der Netzversorgung W gezogen. Die Entnahme verläuft dabei über die 50 Hz-Spule L50 und einen Widerstand R, der den Eingangsstrom im Einschaltmoment begrenzt.

Auf der Ausgangsseite des Gleichrichtermoduls G ist zunächst ein kleiner Eingangskondensator C1 zwischen den Gleichspannungs-Ausgängen ("+", "-") vorgesehen. Darüber hinaus sind die Ausgänge über Ausgangsleitungen mit Außenanschlüssen AA verbunden, an welche der Verbraucher RL angeschlossen werden kann. Parallel zum Verbraucher RL liegt an den Außenanschlüssen AA ein Hauptkondensator C2 (Elektrolytkondensator).
Der Hauptkondensator C2 ist vom Eingangskondensator C1 durch eine in Bezug auf den Gleichrichter in Durchflussrichtung gepolte Diode D getrennt.

Zwischen dem "+" Ausgang des Gleichrichtermoduls G und der Anode der Diode D ist der Eingang eines aktiven Konverters 20 angekoppelt. Durch den aktiven Konverter 20 wird der Eingangskondensator C1 in jeder zweiten Hälfte einer Netzhalbwelle um bzw. auf eine bestimmte Spannung entladen. Dies führt zu einer Veränderung des Eingangsstroms, da nun dieser Kondensator schon früher geladen wird als der Hauptkondensator. Die Entladung kann mittels bekannter Schaltungen wie z.B. Boost oder Flyback (Sperrwandler) geschehen. Die transportierte Energie kann entweder dem Hauptkondensator zugefügt oder zu den Ausgängen X gebracht werden.

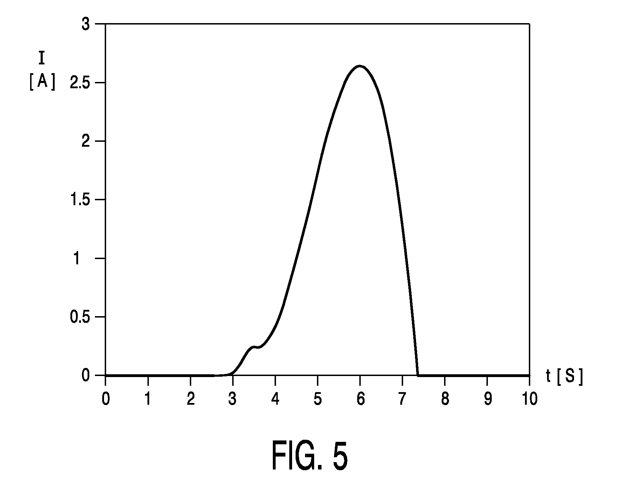

Figur 5 zeigt den resultierenden Signalverlauf der Stromentnahme (50 Hz Eingangsstrom, eine Halbwelle) bei Anwendung der Schaltung nach Figur 4. Der Eingangsstrom weist an seinem in der Figur linken Fußpunkt eine Verbreiterung auf, welche zu einer Dämpfung der Harmonischen des Eingangsstromes führt.

In der Schaltung nach Figur 4 kann die 50 Hz-Spule L50 um mehr als 40% verkleinert werden, wenn man (L x I² /2) als Näherungsmaß für die Größe der Spule benutzt.

Bei allen Vorschlägen kann die Verwendung nichtlinearer Magneten zur weiteren Reduzierung der Größe der magnetischen Komponenten verwendet werden.

### Bezugszeichenliste:

| | |
|---|---|
| AA | Außenanschluss |
| AC | Wechselspannungsquelle |
| C | Glättungskondensator |
| C1 | Kondensator |
| C2 | Hauptkondensator |
| D | Diode |
| EA | Externer Anschluss |
| G | Gleichrichter |
| I | Strom |
| IA | Interner Anschluss |
| L50 | 50 Hz-Spule |
| R | Ohmscher Widerstand |
| RL | Verbraucher |
| Rm, Ra | Verbraucher im ersten/zweiten Eingangspfad |
| t | Zeit |
| W | Wechselspannungseinspeisung |

## Patentansprüche

1. Schaltung zur Umwandlung von Wechselspannung in Gleichspannung für mindestens einen Verbraucher, enthaltend
- eine Wechselspannungseinspeisung (W),
- ein Gleichrichtermodul (G), dessen zwei Eingänge mit der Wechselspannungseinspeisung verbunden sind und an dessen zwei Ausgängen (+, -) zwei Ausgangsleitungen mit Außenanschlüssen (AA) für die Ankopplung mindestens eines Verbrauchers (RL) angeschlossen sind,
- einen Hauptkondensator (C2), welcher parallel zu einem anzuschließenden Verbraucher zwischen den beiden Außenanschlüssen (AA) des Gleichrichtermoduls (G) liegt,
- mindestens eine zwischen der Wechselspannungseinspeisung (W) und dem Gleichrichtermodul (G) angeordnete Induktionsspule (L50),
**dadurch gekennzeichnet,**
**dass** die Schaltung weiterhin enthält:
- einen weiteren Kondensator (C1), welcher parallel zum Hauptkondensator (C2) zwischen den beiden Ausgängen (+, -) des Gleichrichtermoduls (G) liegt,
- eine Diode (D), welche in einer der Ausgangsleitungen des Gleichrichtermoduls (G) liegt und den Hauptkondensator (C2) vom weiteren Kondensator (C1) trennt,
- einen aktiven Konverter (20), dessen Eingang zwischen der Diode (D) und einem der Ausgänge (+) des Gleichrichtermoduls (G) angeschlossen ist und welcher so eingerichtet ist, dass er den weiteren Kondensator (C1) in der zweiten Hälfte jeder von der Wechselspannungseinspeisung (W) eingespeisten Halbwelle zumindest teilweise entlädt.

2. Schaltung nach Anspruch 1,
**dadurch gekennzeichnet,**
**dass** der aktive Konverter (20) ein Aufwärtsregler bzw. Hochsetzsteller oder ein Sperrwandler ist.

3. Schaltung nach einem der Ansprüche 1 oder 2,
**dadurch gekennzeichnet,**
**dass** der Ausgang des Konverters (20) mit dem Hauptkondensator (C2) verbunden ist, so dass er die vom Kondensator (C1) entnommene Ladung am Hauptkondensator (C2) abgeben kann.

4. Schaltung nach mindestens einem der Ansprüche 1 oder 2,
**dadurch gekennzeichnet,**
**dass** die vom Konverter transportierte Energie zur Versorgung der Schaltregler-IC's eines nachgeschalteten DC-DC-Konverters verwendbar ist.

5. Schaltung nach mindestens einem der Ansprüche 1 oder 2,
**dadurch gekennzeichnet,**
**dass** die vom Konverter transportierte Energie direkt einer Last auf der netzgetrennten Seite eines nachgeschalteten DC-DC-Konverters zuführbar ist.
